# EUROPEAN PATENT APPLICATION

(11) **EP 4 574 685 A1**
(43) Date of publication of application: **25.06.2025**
(21) Application number: 22955722.8
(22) Date of filing: 18.08.2022
(51) Int. Cl.: B64G 1/50

(54) **SPACECRAFT**

(71) Applicant: Institute for Q-shu Pioneers of Space, Inc., Fukuoka-shi Fukuoka 8100001 (JP)
(72) Inventor: KITAMURA Hiroki, Fukuoka-shi, Fukuoka 810-0001 (JP)
(74) Representative: Plougmann Vingtoft a/s
(86) International application number: PCT/JP2022/031238
(87) International publication number: WO 2024/038548

(57) **Abstract**

To provide a spacecraft with an enhanced heat dissipation capability.

A spacecraft (1) according to an embodiment includes: a body (300) in which a plurality of devices including an oscillator (111) that outputs a signal having a frequency of at least one frequency band are mounted; a plurality of heat radiation plates (402) arranged outside the body, extending substantially parallel to a reference direction (D), and provided to face each other; at least one amplifier (112) arranged in a region surrounded by the plurality of heat radiation plates (402), connected to any one of the plurality of heat radiation plates (402), and configured to amplify the signal output by the oscillator (111); and an antenna unit (131 and 132) arranged outside the body (300) and configured to radiate radio waves traveling in the reference direction (D) by using the signal amplified by the at least one amplifier (112).

## Description

### Technical Field

The technology disclosed in the present application relates to a mechanism in which a satellite including a synthetic aperture radar (SAR) radiates heat generated from an amplifier during SAR observation.

### Background Art

Broadly speaking, satellites that observe the earth can be divided into an optical satellite and a satellite with an SAR (SAR satellite).

The optical satellite can generate a color image of a ground surface by observing the ground surface with a normal camera. This makes it possible to obtain a lot of information from the visualized color image. However, the optical satellite has a disadvantage that the earth cannot be observed at nighttime when light of the sun is not reflected on the ground surface and under a bad weather with clouds covering the ground surface. On the other hand, the SAR satellite has an advantage that the earth can be observed even under an environment such as nighttime and bad weather.

On the other hand, the SAR satellite requires a large amount of power to operate the radar. Further, since conversion efficiency of an amplifier that converts power of an input signal into such large power and supplies the power to the radar is usually about 30 to 40%, the remaining loss is generated as heat. For this reason, the SAR satellite requires appropriate heat dissipation design when performing imaging for a long time.

For example, in the case where the SAR satellite performs observation with an average power of 300 W by using an amplifier with conversion efficiency of 30%, supplied power is 1 kW, and 700 W (=J/sec) corresponding to the loss thereof is accumulated inside the SAR satellite as heat. The amount of heat generated in a case where the SAR satellite continues such observation for one minute is 42000 J. Taking 100 g of aluminum as an example, this energy is enough to increase the temperature of aluminum to 400 °C or more. In the case where such an amount of heat is accumulated in the device mounted inside the SAR satellite, the temperature of such a device would reach an extreme temperature that can destroy the device.

In the case of the SAR satellite that observes the earth, the length of the continuous imaging time is directly associated to the size of an observation range, and thus, it is important how to perform heat dissipation from an element serving as a heat source.

Generally, roughly speaking, the technology for heat dissipation in a satellite includes technology of actively releasing heat from a heat dissipation target device using power, such as a heat pipe or a thermal louver, and a technology of passively releasing heat from a heat dissipation target device using heat conduction, thermal radiation, or the like.

The former technology requires a power supply device that supplies power to the heat pipe or the like, and further increases the mass of the satellite because of added power supply device. Therefore, the former technology has two limitations: power and mass. Therefore, in satellites, particularly small satellites, it is preferable to passively release heat from a heat dissipation target device as in the latter technology.

JP 3979325 B1 (Patent Literature 1) discloses a technology of disclosing a heat sink for passively releasing heat of a thruster.

### Citation List

### Patent Literature

Patent Literature 1: JP 3979325 B2

### Summary of Invention

### Technical Problem

However, in the technology disclosed in this literature, the heat sink is installed inside a satellite, heat is accumulated inside the satellite. Therefore, in such a technology, an effect of releasing heat to the outside of the satellite is very poor.

Therefore, the technology disclosed in the present application provides a spacecraft with an improved heat dissipation capability.

### Solution to Problem

A spacecraft according to an aspect can include: "a body in which a plurality of devices including an oscillator that outputs a signal having a frequency of at least one frequency band are mounted; a plurality of heat radiation plates arranged outside the body, extending substantially parallel to a reference direction, and provided to face each other; at least one amplifier arranged in a region surrounded by the plurality of heat radiation plates, connected to any one of the plurality of heat radiation plates, and configured to amplify the signal output by the oscillator; and an antenna unit arranged outside the body and configured to radiate radio waves traveling in the reference direction by using the signal amplified by the at least one amplifier".

### Advantageous Effects of Invention

According to the technology disclosed in the present application, it is possible to provide a spacecraft with an improved heat dissipation capability.

The above-described effects are merely effects exemplified for convenience of description, and do not limit the invention according to the present application. According to the technology disclosed in the present application, it is possible to achieve any of the effects described in the present specification in addition to or instead of the above effects.

### Brief Description of Drawings

Fig. 1 is a side view schematically illustrating an example of a configuration of a spacecraft according to an embodiment.
Fig. 2 is a block diagram illustrating an example of the configuration of the spacecraft illustrated in Fig. 1.
Fig. 3 is a block diagram illustrating an example of functions of a transmitter 110 illustrated in Fig. 2.
Fig. 4 is a cross-sectional view schematically illustrating a partial configuration of a spacecraft 1 illustrated in Fig. 1 when viewed from a cross section passing through a central portion of the spacecraft 1.
Fig. 5 is a top view schematically illustrating the partial configuration of the spacecraft 1 illustrated in Fig. 4 when viewed from a direction indicated by an arrow A.
Fig. 6 is a schematic view illustrating an extension direction of a heat radiation plate included in the spacecraft 1 illustrated in Fig. 1.
Fig. 7 is a side view schematically illustrating an example of a configuration of a support frame that can be included in a heat radiation unit 400 of the spacecraft 1 illustrated in Fig. 1.
Fig. 8 is a perspective view schematically illustrating a part of another configuration example of the spacecraft 1 illustrated in Fig. 1.
Fig. 9 is an enlarged perspective view illustrating only a first thermally conductive member 500 and a periphery thereof illustrated in Fig. 8.
Fig. 10 is a top view schematically illustrating the partial configuration of the spacecraft 1 illustrated in Fig. 4 when viewed from the direction indicated by the arrow A.

### Description of Embodiments

Hereinafter, various embodiments of the present invention will be described with reference to the accompanying drawings. Additionally, components common in the drawings are denoted by the same reference signs. Further, it should be noted that components illustrated in a certain drawing may be omitted in another drawing for convenience of description. Furthermore, it should be noted that the accompanying drawings are not necessarily drawn to scale.

### 1. Configuration of Spacecraft

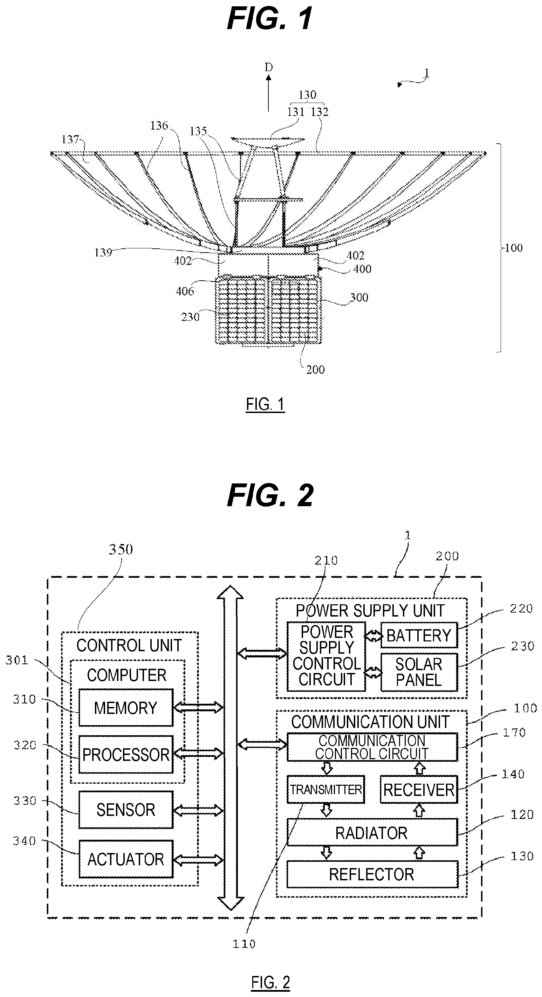

Fig. 1 is a side view schematically illustrating an example of a configuration of a spacecraft according to an embodiment. For convenience of description, a part of a configuration including a rib 136, a planar body 137, and the like is partially omitted in Fig. 1.

As illustrated in Fig. 1, a spacecraft 1 can roughly include a communication unit 100, a power supply unit 200, a body 300, and a heat radiation unit 400.

Briefly, the power supply unit 200 may provide power to drive various devices including a control unit (not illustrated), a communication unit 100, and the like in space. The control unit can be a unit configured to control navigation of the spacecraft 1 itself and control an operation and posture of the spacecraft 1 in space.

In short, various devices including the power supply unit 200 and the control unit (not illustrated) can be mounted inside the body 300.

In short, the communication unit 100 can be a unit configured to emit radio waves toward space (particularly the earth), and receive radio waves from space (particularly the earth).

The heat radiation unit 400 can be a unit configured to radiate heat generated by an amplifier (not illustrated).

In the present embodiment, as an example, the spacecraft 1 can be used as a small satellite on which a synthetic aperture radar (SAR) is mounted. Such a small SAR satellite can be used to radiate radio waves in a microwave band, a millimeter wave band, or a sub-millimeter wave band toward an observation target (for example, the earth) and receive reflected waves from the observation target, thereby observing and/or analyzing the observation target.

Here, since the SAR satellite that receives the reflected waves from the observation target requires high-output power, it is necessary to mount an amplifier that amplifies power. The amplifier can be a very important heat source for generating high-output power. Therefore, particularly in a case where the spacecraft 1 is used as the small SAR satellite, it is very important how efficiently heat generated in such an amplifier is radiated. On the other hand, in the small SAR satellite, electronic components including the amplifier need to be arranged in a limited housing space, and thus, it is important to efficiently arrange the electronic components in consideration of a heat radiation effect.

Hereinafter, a case where the spacecraft 1 illustrated in Fig. 1 is used as the small SAR satellite will be described. However, the technology disclosed in the present application can be applied to other applications or other forms (for example, large satellites).

### (1) Body 300

The body 300 can include a housing space (not illustrated) for housing various electronic devices, mechanical components, and the like therein. As an example, the body 300 has an octahedron shape having a substantially hexagonal shape when viewed from above, and can be formed in a hollow shape to have a housing space therein. However, the shape of the body 300 can be any shape including another polyhedron, a sphere, and the like as long as the housing space can be formed inside the body 300. Hereinafter, as an example, a case where the body 300 has an octahedron shape having a substantially hexagonal shape when viewed from above will be described.

Various electronic devices including a computer 301, a sensor 330, an actuator 340, a power supply control circuit 210, a battery 220, a communication control circuit 170, and the like, which are described below with reference to Fig. 2, and wirings electrically connecting the devices can be housed in the housing space (not illustrated) formed inside the body 300.

### (2) Power Supply Unit 200

In an embodiment, the power supply unit 200 may include a solar panel 230 in addition to the power supply control circuit 210 and the battery 220 (see Fig. 2 described below). The power supply control circuit 210 and the battery 220 can be housed in the housing space formed inside the body 300. The solar panel 230 can, by way of example, be positioned on a wall surface (outer surface) of the body 300 to cover an outer surface of the body 300. As the solar panel 230 is arranged in this manner, the wall surface of the body 300 can be effectively used.

### (4) Heat Radiation Unit 400

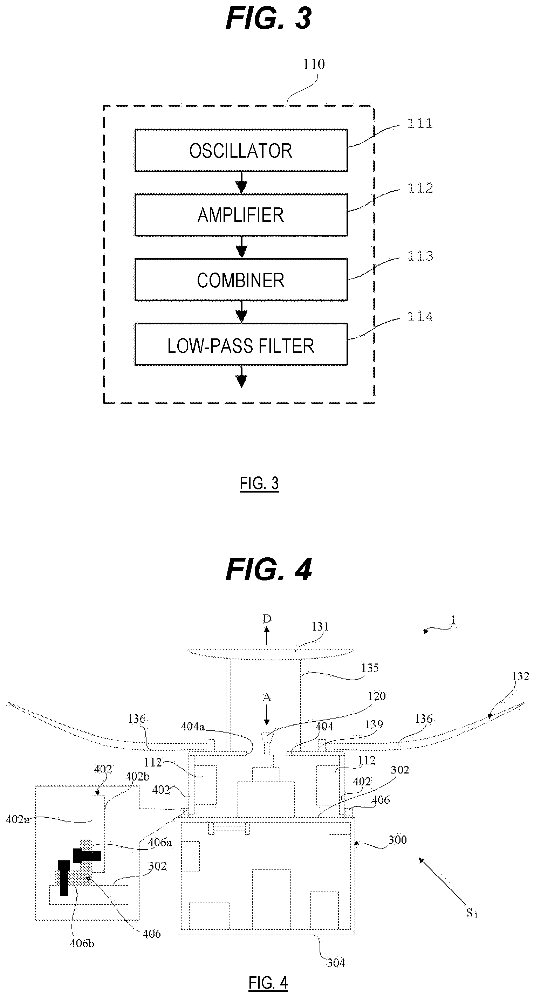

The heat radiation unit 400 can be arranged at a position outside and above the body 300, the position not being in contact with the body 300. Broadly speaking, the heat radiation unit 400 can include a plurality of heat radiation plates 402 provided to face each other, and at least one amplifier 112 (see Figs. 3, 4, 7, and the like described below) arranged in a region surrounded by the plurality of heat radiation plates 402 and fixed to any one of the plurality of heat radiation plates 402.

Here, as the body 300 is formed to have an octahedron shape having a substantially hexagonal shape when viewed from above, the plurality of heat radiation plates 402 can include six heat radiation plates 402 facing each other so as to form the substantially hexagonal shape as a whole when viewed from above.

A detailed configuration of such a heat radiation unit 400 is described below.

### (3) Communication Unit 100

The communication unit 100 can include a transmitter 110 (see Fig. 2 described below), a radiator 120 (see Figs. 2 and 4 described below), a sub-reflector 131 that is arranged to face the radiator 120 at a predetermined angle and reflects radio waves radiated from the radiator 120 to a main reflector 132, the main reflector 132 that is arranged to face a mirror surface of the sub-reflector 131 and further reflects the radio waves reflected by the sub-reflector 131 to radiate the radio waves to the outside, and a support rod 135 that supports the sub-reflector 131.

The main reflector 132 can include a hub 139, a plurality of ribs 136, the planar body 137, and the like. The hub 139 can be fixed to the heat radiation unit 400 (a top plate 404 of the heat radiation unit 400 described below). The hub 139 can have a substantially annular shape as a whole.

One end of each rib 136 included in the plurality of ribs 136 can be fixed to an outer peripheral surface of the hub 139. The planar body 137 can be provided to extend between two adjacent ribs. Each rib 136 and the planar body 137 can be compactly folded so as to be wound around the hub 139 in an aspect in which the spacecraft 1 is transported and in an aspect in which the spacecraft 1 is launched, and can be deployed in an aspect in which the spacecraft 1 reaches space.

The main reflector 132 can be formed to have a parabolic reflective surface in order to function as a main reflector as described above (for example, in a case where the spacecraft 1 is present in space). The main reflector 132 can reflect the radio waves radiated from the radiator 120 and reflected by the sub-reflector 131 by using the reflective surface to radiate the radio waves traveling in a reference direction D. The reference direction D can extend along a virtual line connecting the spacecraft 1 and the earth (not illustrated).

It can be said that one or more of the sub-reflector 131, the main reflector 132, and the support rod 135 implement an "antenna unit". Alternatively, it can also be said that one or more of the radiator 120, the sub-reflector 131, the main reflector 132, and the support rod 135 implement the "antenna unit". Furthermore, it can be said that one or more of the transmitter 110, the radiator 120, the sub-reflector 131, the main reflector 132, and the support rod 135 implement the "antenna unit".

In an example, such an antenna unit can be arranged at a position sandwiching the heat radiation unit 400 with the body 300, that is, above the heat radiation unit 400, as illustrated in Fig. 1. In another example, unlike the example illustrated in Fig. 1, such an antenna unit can be arranged on any surface on which the heat radiation unit 400 is not attached among the surfaces of the body 300, for example, a lower surface of the body 300 illustrated in Fig. 1. In any case, the main reflector 132 included in the antenna unit can radiate the radio waves traveling in the reference direction D as described above.

In the present embodiment, a case where the spacecraft 1 is used as a small SAR satellite including a Cassegrain antenna in which the main reflector 132 is formed in a parabolic shape will be described. However, the spacecraft 1 may be another parabolic antenna including a Gregorian antenna or the like, or a satellite having a planar antenna.

### 2. Function of Spacecraft 1

Fig. 2 is a block diagram illustrating an example of functions of the spacecraft 1 illustrated in Fig. 1. The spacecraft 1 does not need to include all the components illustrated in Fig. 2, and may have a configuration in which some of the components are omitted, or may include other components. For example, the spacecraft 1 can also include a plurality of power supply units 200 and/or a plurality of communication units 100.

As illustrated in Fig. 2, the spacecraft 1 can roughly include a control unit 350, the power supply unit 200, and the communication unit 100. The components can be electrically connected to each other via a control line and a data line.

### (1) Control Unit 350

The control unit 350 may include a memory 310, a processor 320, and the sensor 330. The memory 310 is implemented by a random access memory (RAM), a read only memory (ROM), a non-volatile memory, a hard disk drive (HDD), and/or the like, and can function as a storage section.

The memory 310 can store instructions for various types of control of the spacecraft 1 as a computer program. The memory 310 can store at least one of the following exemplified pieces of information.
- An image of the outside (for example, a ground surface) of the spacecraft 1 captured by a camera (not illustrated)
- An observed value obtained by using the communication unit 100 as a radar
- Information received from a ground station via the communication unit 100
- Information transmitted to the ground station via the communication unit 100
- Information or the like that is detected by the sensor 330 or the like and is necessary for controlling the posture and/or a traveling direction of the spacecraft 1

The processor 320 can function as a control section that controls the spacecraft 1 based on the computer program stored in the memory 310. Specifically, the processor 320 can execute the computer program stored in the memory 310 to control the power supply unit 200, the communication unit 100, the sensor 330, and the like.

As an example, the processor 320 may perform at least one of operations exemplified below.
- Generation of information to be transmitted to the ground station and/or another spacecraft via the communication unit 100
- Control regarding observation performed by radiating the radio waves to the observation target using the communication unit 100 as a radar, and receiving the reflected waves thereof

The sensor 330 can include, for example, at least one of the sensors exemplified below.
- A gyro sensor, an acceleration sensor, a position sensor, a speed sensor, a star sensor, and/or the like used for controlling the traveling and/or posture of the spacecraft 1.
- A temperature sensor, an illuminance sensor, an infrared sensor, and/or the like used for observing an external environment of the spacecraft 1.
- A temperature sensor and/or an illuminance sensor or the like used for measuring an internal environment of the spacecraft 1

Information and/or data detected by the sensor 330 can be stored in the memory 310, used for control by the processor 320, and transmitted to a base on the ground via the communication unit 100.

The actuator 340 can include, for example, a magnetic torquer, a reaction wheel, a control moment gyro (CMG), and/or the like. The actuator 340 is used to obtain a torque and/or thrust for controlling the posture of the spacecraft 1 in response to an instruction from the processor 320, and can function as a propulsion section.

### (2) Power Supply Unit 200

The power supply unit 200 can include the power supply control circuit 210, the battery 220, and the solar panel 230, and can function as a power supply section.

The power supply control circuit 210 is connected to the battery 220 and can control charging and discharging of power from the battery 220. The battery 220 can be controlled by the power supply control circuit 210 to be charged with power generated by the solar panel 230 and store the power to be supplied to each drive system such as the computer 301 in the body 300 and/or the communication unit 100.

### (3) Communication Unit 100

The communication unit 100 may include the communication control circuit 170, the transmitter 110, a receiver 140, the radiator 120, and a reflector 130, and may function as a communication section.

The communication control circuit 170 can execute processing including encoding/decoding of information/signals and the like in order to transmit/receive information to/from the ground station and/or another spacecraft via the connected radiator 120.

The transmitter 110 can include an oscillator, an amplifier, and the like. The amplifier can amplify a signal (radio wave) having a frequency of a predetermined frequency band generated by the oscillator. The radiator 120 can radiate the signal (radio wave) amplified by the amplifier to the reflective surface of the reflector 130.

In an embodiment, the communication unit 100 can be used to radiate radio waves to the observation target and perform observation by using the reflected waves thereof. Therefore, the radio waves radiated from the radiator 120 are once reflected by the sub-reflector 131 included in the reflector 130, and then radiated toward the outside (for example, the ground surface) by the main reflector 132. The radio waves radiated by the main reflector 132 can travel in the reference direction D (see Fig. 1) and reach the ground surface. On the other hand, the reflected waves received from the outside (by the main reflector 132) can be received by the receiver 140 through a reverse path.

In the present embodiment, a case where the communication unit 100 includes a pair of sub-reflectors 131 and the main reflector 132 will be described. The communication unit 100 can be adjusted to use a frequency of at least one of bands exemplified below.
- A microwave band including a frequency band of 8 GHz or less, a band of 8 GHz to 12GHz (so-called an X band), and/or a band of 12 GHz to 18GHz (so-called Ku band).
- A millimeter wave band of 30 GHz or more
- A sub-millimeter wave band or the like of 300 GHz or more

### (4) Transmitter 110 Included in Communication Unit 100

Fig. 3 is a block diagram illustrating an example of functions of the transmitter 110 illustrated in Fig. 2. As illustrated in Fig. 3, the transmitter 110 may include an oscillator 111, the amplifier 112, a combiner 113, and a low-pass filter 114.

The oscillator 111 can be arranged, by way of example, inside the body 300 (see Fig. 1). The oscillator 111 can output a high-frequency signal serving as radio waves for conveying a signal or the like. In the present embodiment, the oscillator 111 can output a signal (radio wave) having a frequency of at least one frequency band among frequency bands exemplified below.
- A microwave band including a frequency band of 8 GHz or less, a band of 8 GHz to 12GHz (so-called an X band), and/or a band of 12 GHz to 18GHz (so-called Ku band).
- A millimeter wave band of 30 GHz or more
- A sub-millimeter wave band of 300 GHz or more

The amplifier 112 is electrically connected to the oscillator 111, and can amplify power of the radio waves (signal) output by the oscillator 111. In the present embodiment, as an example, it is possible to observe observation target data by radiating radio waves toward an external observation target and receiving reflected waves reflected by the observation target. Therefore, very high transmit power is required.

In the present embodiment, the amplifier 112 can amplify the signal (radio wave) output from the oscillator 111 in such a way that total power of the signal (radio wave) output from the oscillator 111 becomes power of 100 W to 5000 W, preferably, transmission power of 1000 W to 3000 W. The amplifier 112 can be implemented by a combination of one or more amplifiers according to an output thereof. A specific configuration of the amplifier 112 is described below. The output of the amplifier 112 is merely an example. For example, the upper limit and the lower limit of each range described above merely define currently required power, and even in a case where the output exceeds the upper limit or the output falls below the lower limit, it is possible to obtain an effect such as a heat radiation effect by applying the configuration disclosed in the present application.

In a case where the amplifier 112 is implemented by a combination of a plurality of amplifiers, the combiner 113 is electrically connected to the amplifier 112 and can combine signals (radio waves) output from the respective amplifiers to generate one carrier wave. The low-pass filter 114 is electrically connected to the combiner 113, and can extract (pass) only a low frequency component from the signal (radio wave) output from the combiner 113 and output the low frequency component to the radiator 120. Such a low-pass filter 114 can be used, for example, to remove a signal (radio wave) in a frequency band whose use is limited by the Radio Act or the like. The signal (radio wave) that has passed through the low-pass filter 114 is output to the radiator 120 illustrated in Fig. 2, and is radiated to the outside (the earth or the like) via the radiator 120, the reflector 130, and the like.

Here, as the amplifier 112 included in the transmitter 110, a high-output power amplifier can be used as described above. Therefore, the amplifier 112 radiates heat during operation, and can thus adversely affect a surrounding electronic device. Furthermore, when a temperature of the amplifier 112 becomes high, a risk of a failure or the like increases also in elements included in the amplifier 112. The configuration of the amplifier 112 is described in detail below.

As described below, the amplifier 112 included in the transmitter 110 can be arranged outside the body 300 (inside the heat radiation unit 400). On the other hand, each of the oscillator 111, the combiner 113, and the low-pass filter 114 included in the transmitter 110 may be arranged inside the body 300 or may be arranged outside the body 300 (inside the heat radiation unit 400 or the like).

### 3. Configuration of Heat Radiation Unit 400 and Configuration Related to Heat Radiation Unit 400

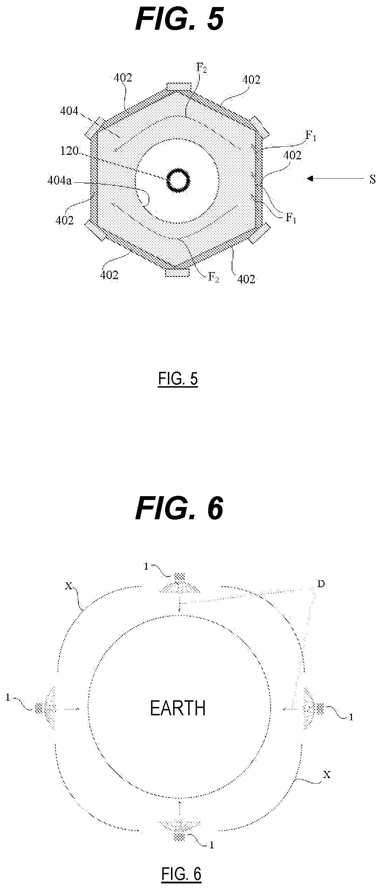

Fig. 4 is a cross-sectional view schematically illustrating the configuration of the spacecraft 1 illustrated in Fig. 1 when viewed from a cross section passing through a central portion of the spacecraft 1. Fig. 5 is a top view schematically illustrating a partial configuration of the spacecraft 1 illustrated in Fig. 4 when viewed from a direction indicated by an arrow A.

Figs. 4 and 5 illustrate an example in which both the antenna unit and the heat radiation unit 400 are provided in association with the same surface (here, an upper surface 302 as an example) of the body 300 in an embodiment. However, in another embodiment, the antenna unit and the heat radiation unit 400 can be provided in association with different surfaces of the body 300. For example, the antenna unit can be provided in association with the upper surface 302 of the body 300 (above the upper surface 302), and the heat radiation unit 400 may be provided in association with a lower surface 304 of the body 300 (below the lower surface 304).

### (1) Arrangement of Antenna Unit

Before describing the heat radiation unit 400, the arrangement of the antenna unit will be briefly described. As illustrated in Fig. 4, in an embodiment, the antenna unit can be arranged above the upper surface 302 of the body 300. That is, the antenna unit can be arranged in such a way that the heat radiation unit 400 is interposed between the antenna unit and the upper surface 302 of the body 300.

Specifically, the radiator 120 is fixed on the upper surface 302, and the support rod 135 supporting the sub-reflector 131, and the hub 139 can be fixed on the top plate 404 of the heat radiation unit described below. In another example, the support rod 135 can be fixed on the upper surface 302 through an opening 404a formed in the top plate 404 described below.

The radiator 120 can be implemented by a horn type radiator as an example. Further, the sub-reflector 131 can be arranged at a predetermined distance from the radiator 120 by the support rod 135.

### (2) Specific Configuration of Heat Radiation Unit 400

Referring to Figs. 4 and 5, the heat radiation unit 400 can include the plurality of heat radiation plates (heat sinks) 402 arranged outside the body 300 and provided to face each other, at least one amplifier 112 arranged in the region surrounded by the plurality of heat radiation plates 402 and fixed (thermally connected) to any one of the plurality of heat radiation plates 402, the top plate 404 formed of a thermally conductive member that is attached to the plurality of heat radiation plates 402 and surrounds the amplifier 112 in cooperation with the plurality of heat radiation plates 402, and at least one heat insulating member 406 provided in association with each of the plurality of heat radiation plates 402 and fixing the heat radiation plate 402 to the body 300.

### (2A) Heat Radiation Plate (Heat Sink) 402 and Heat Insulating Member 406

Fig. 5 illustrates an example in which the plurality of heat radiation plates 402 include six heat radiation plates 402 facing each other so as to form a substantially hexagonal shape as a whole when viewed from above. However, the plurality of heat radiation plates 402 may also include, for example, four heat radiation plates 402 (or eight heat radiation plates 402) so as to form a substantially quadrangular shape (or a substantially octagonal shape) as a whole when viewed from above.

Each heat radiation plate 402 can be provided so as to extend substantially parallel to the reference direction D. Specifically, each heat radiation plate 402 can be provided in such a way that an outer surface thereof extends substantially parallel to the reference direction D. The reason is as follows.

Fig. 6 is a schematic view illustrating an extension direction of the heat radiation plate included in the spacecraft 1 illustrated in Fig. 1. In Fig. 6, the reference direction D is a direction in which the radio waves emitted by the spacecraft 1 travel (a direction toward the earth), and a direction X is the traveling direction of the spacecraft 1. Heat input by sunlight, albedo, and infrared radiation and radiative heat dissipation can be obtained by calculation.

It is also assumed that the heat input by sunlight to the outer surface of the radiation plate 402 can be suppressed by installing the radiation plate 402 in such a way that the outer surface of the radiation plate 402 is perpendicular to the reference direction D (the direction toward the earth).

However, when the calculation is actually progressed, a temperature of the ground surface of the earth in the reference direction D is generally said to be 255K (-18 degrees Celsius), which is extremely higher than 3K (-270 degrees Celsius), which is a temperature of space. Therefore, in a case where the radiation plate 402 is installed in such a way that the outer surface of the radiation plate 402 is perpendicular to the reference direction D (the direction toward the earth), there is a limit to the amount of heat that can be radiated by thermal radiation of the heat radiation plate 402 toward the earth. Therefore, it is difficult to increase a time for imaging by the spacecraft 1.

Here, the temperature of space is 3K (-270 degrees Celsius), which is very low as described above. Therefore, it is preferable to install the heat radiation plate 402 in such a way that the outer surface of the radiation plate 402 does not avoid the heat input from the sun, but extends mainly in a direction facing space, that is, substantially parallel to the reference direction D even in a case where there is some heat input from the sun.

For this reason, it is preferable that the outer surface of each heat radiation plate 402 is provided so as to extend substantially parallel to the reference direction D. In a case where each heat radiation plate 402 is installed in this manner, any one of the radiation plates 402 can be irradiated with sunlight, for example, at a timing at which shading and sunshine are switched. Therefore, a configuration described below may be adopted as an option in order to cope with such a situation.

Further, the radiation plate 402 (at least an outer surface 402a thereof) can be formed of a material having a low solar absorptivity α and a high thermal radiation emissivity ε. The material preferably has a solar absorptivity α of 0.2 or less and a thermal radiation emissivity ε of 0.7 or more. Further, it is more preferable that the material has a solar absorptivity α of 0.1 or less and a thermal radiation emissivity ε of 0.8 or more. The material is more preferable when an α/ε ratio is smaller. Examples of such a material can include silver-deposited Teflon, aluminum-deposited Teflon, indium oxide, indium tin oxide, white paint, black paint, or combinations thereof, without being limited thereto.

As a result, heat can be efficiently radiated from the amplifier 112 and the heat radiation plate 402 toward space, and thus, it is possible to perform continuous imaging one or more times or a plurality of times (a larger number of times) while the spacecraft 1 is orbiting the earth.

Furthermore, at least a part of the radiation plate 402 (at least the outer surface 402a thereof) can be coated with silver-deposited Teflon, aluminum-deposited Teflon, indium oxide, indium tin oxide, white paint, black paint, and/or combinations thereof (more preferably with silver-deposited Teflon or aluminum-deposited Teflon) in order to further enhance the heat radiation effect. Such coating can include sticking a coating material formed in a sheet shape and/or spraying a coating material formed in a liquid state. In addition, such coating can be applied to any other surface of the radiation plate 402 in addition to or instead of the outer surface 402a of the radiation plate 402.

Returning to Fig. 4, each heat radiation plate 402 can be fixed to the upper surface 302 of the body 300 via at least one heat insulating member 406. Specifically, as an example, the heat insulating member 406 may have a substantially L-shaped or substantially inverted L-shaped cross-sectional shape. In the heat insulating member 406 having such a cross-sectional shape, one surface 406a is in contact with the outer surface (side wall) 402a of the heat radiation plate 402 and fixed by screws, bolts, rivets, or the like, and the other surface 406b extending substantially at a right angle to the surface 406a is in contact with the upper surface 302 of the body 300 and fixed by screws, bolts, rivets, or the like, so that the heat radiation plate 402 can be arranged on the upper surface 302 of the body 300.

As illustrated in Fig. 4, the heat insulating member 406 can be used to arrange the heat radiation plate 402 at a distance from the upper surface 302 of the body 300, namely, can prevent the heat radiation plate 402 from being in contact with the body 300. As a result, it is possible to suppress thermal connection between the heat radiation plate 402 (and the amplifier 112 attached thereto) and the body 300.

Fig. 4 illustrates an example in which the heat insulating member 406 is provided so as to secure a gap in a region between the upper surface 302 of the body 300 and a surface of the heat radiation plate 402 that faces the upper surface 302. However, in another example, the heat insulating member 406 may have a shape that fills the gap, that is, a shape that fills the region. That is, the heat insulating member 406 may have, for example, a substantially T-shaped cross-sectional shape. Accordingly, the heat insulating member 406 can more firmly support the heat radiation plate 402 above the upper surface 302.

Such a heat insulating member 406 can be formed of, for example, a material having a thermal conductivity of 0.2 W/m · K or less. Such a material can be formed of, for example, a resin and/or ceramic. Specifically, such a material may be a polyimide, a laminated heat insulating material, carbon fiber reinforced plastics (CFRP), a glass epoxy resin, and/or a multi-layer insulation (MLI) and the like without being limited thereto.

In this way, the heat radiation plate 402 (the amplifier 112) and the body 300 are not thermally connected to each other, and thus, the heat radiation plate 402 (the amplifier 112) and another electronic device (for example, the processor 320) housed in the housing space inside the body 300 can be isolated from each other, so that the temperature of the heat radiation plate 402 (the amplifier 112) and/or a temperature of the electronic device can be lowered as much as possible. Furthermore, since the battery 220 and the like installed in the body 300 can be maintained at an appropriate temperature, it is also possible to reduce thermal adverse effects on the electronic device.

It is preferable to provide a plurality of (preferably more) heat insulating members 406 for each heat radiation plate 402 to more firmly support each heat radiation plate.

Further, optionally, each of the plurality of heat radiation plates 402 can be arranged in such a way that the side wall (outer surface) 402a is positioned at a distance from an outer edge of the outer surface (here, the upper surface) 302 of the body 300 in a direction toward the center of the outer surface 302. Therefore, for example, as illustrated in Fig. 4, at a timing at which sunlight traveling in an oblique direction S₁ from below is incident on the heat radiation plate 402, a part of such sunlight is blocked by the body 300 and is not incident on the radiation plate 402 (eventually, the amplifier 112 connected thereto), because the radiation plate 402 is arranged more adjacent to the center of the upper surface 302 than the outer edge of the upper surface 302 of the body 300. As a result, a situation in which the temperature of the amplifier 112 rises due to sunlight can be at least partially suppressed. In this sense, the larger the distance between the side wall (outer surface) 402 of the heat radiation plate 402 and the outer edge of the outer surface (upper surface) 302 of the body 300, the more preferable.

### (2B) Amplifier 112

At least one amplifier 112 can be fixed to an inner surface 402b of at least one of the plurality of heat radiation plates 402 described above. In an example, one amplifier 112 can be fixed to the inner surface 402b of each of the plurality of heat radiation plates 402. In the example illustrated in Figs. 4 and 5, for example, one amplifier 112 (six amplifiers 112 in total) can be fixed to the inner surface 402b of each of the plurality of heat radiation plates 402.

Such an amplifier 112 can be positioned inside a region surrounded by the plurality of heat radiation plates 402, the top plate 404, and the upper surface 302 of the body 300.

As described above, a high-output power amplifier can be used as each amplifier 112. Therefore, each amplifier 112 radiates heat during operation and can thus adversely affect a surrounding electronic device unless some measures are taken. Furthermore, when the temperature of each amplifier 112 becomes high, there is a possibility that the elements included in the amplifier 112 fail. Therefore, each amplifier 112 is installed not in the body 300 but in the heat radiation unit 400 provided outside the body 300. Specifically, as described above, each amplifier 111 is arranged inside the region surrounded by the plurality of heat radiation plates 402, the top plate 404, and the upper surface 302 of the body 300. As illustrated in Fig. 4, the region is not a sealed space but a region communicating with space through the opening 404a formed in the top plate 404. Therefore, each amplifier 112 is exposed to space. As a result, each amplifier 112 is isolated from other electronic devices (for example, the processor 320) housed in the housing space inside the body 300, so that it is possible to suppress a situation in which each amplifier 112 adversely affects other electronic devices.

Furthermore, in general, a signal (radio wave) amplified by the amplifier 112 is electrically conveyed via a coaxial cable and/or a waveguide until reaching the radiator 120 via various electrically connected electronic components. In the conveyance process, power is lost when the signal passes through each electronic component and/or each coaxial cable (not illustrated), and as a result, transmission efficiency of the signal tends to decrease. Therefore, each amplifier 112 (that is, the heat radiation plate 402 connected to the amplifier 112) is preferably arranged at a position closer to the radiator 120. As a result, power loss can be reduced by reducing a required length of the coaxial cable and/or waveguide.

In the example illustrated in Fig. 4 and the like, the amplifier 112 and the heat radiation plate 402 are described as separate components, but one set of one amplifier 112 and one or more heat radiation plates 402 can also be regarded as constituting one amplifier 112 (for example, the outer surface of one amplifier 112 is configured as one or more heat radiation plates 402).

At least one amplifier 112 can be fixed to at least one heat radiation plate 402 (or two or more heat radiation plates 402 or all the heat radiation plates 402) of the plurality of heat radiation plates 402. The "at least one amplifier 112" referred to herein can be, for example, one amplifier 112 or two amplifiers 112, and can include three or more amplifiers 112 or all the amplifiers 112. In addition, in the technology disclosed in the present application, at least one amplifier 112 included in the heat radiation unit 400 may be connected to each other in any manner (for example, in series, in parallel, and/or by a combination thereof).

### (2C) Top Plate 404

The top plate 404 can be a member that is fixed to an upper portion (for example, the upper surface, the inner surface, or the like of each heat radiation plate 402) of each heat radiation plate 402 and surrounds each amplifier 112 in cooperation with each heat radiation plate 402. The top plate 404 can have a shape corresponding to the total number of the plurality of heat radiation plates 402. For example, in a case where six heat radiation plates 402 are provided (the heat radiation plates 402 form a hexagonal shape when viewed from above), the top plate can also have a hexagonal shape, and in a case where four heat radiation plates 402 are provided (the heat radiation plates 402 form a quadrangular shape when viewed from above), the top plate can also have a quadrangular shape.

The top plate 404 may have the opening 404a formed at the center thereof to allow the radiator 120 to pass therethrough. Although Fig. 5 illustrates an example in which the opening 404a has a circular shape, the opening 404a can be formed to have any shape.

Further, the top plate 404 communicates with space, so that each amplifier 112 can be exposed to space. In addition, the top plate 404 can also allow the support rod 135 to pass through the opening 404a and allow the support rod 135 to be fixed to the upper surface 302 of the body 300.

Furthermore, the top plate 404 can be formed of the same material as the heat radiation plate 402 described above (a material having the same solar absorptivity α and/or thermal radiation emissivity ε). Furthermore, (for example, the outer surface of) the top plate 404 can be coated with the same coating as that applied to the heat radiation plate 402 described above.

### (2D) Support Frame

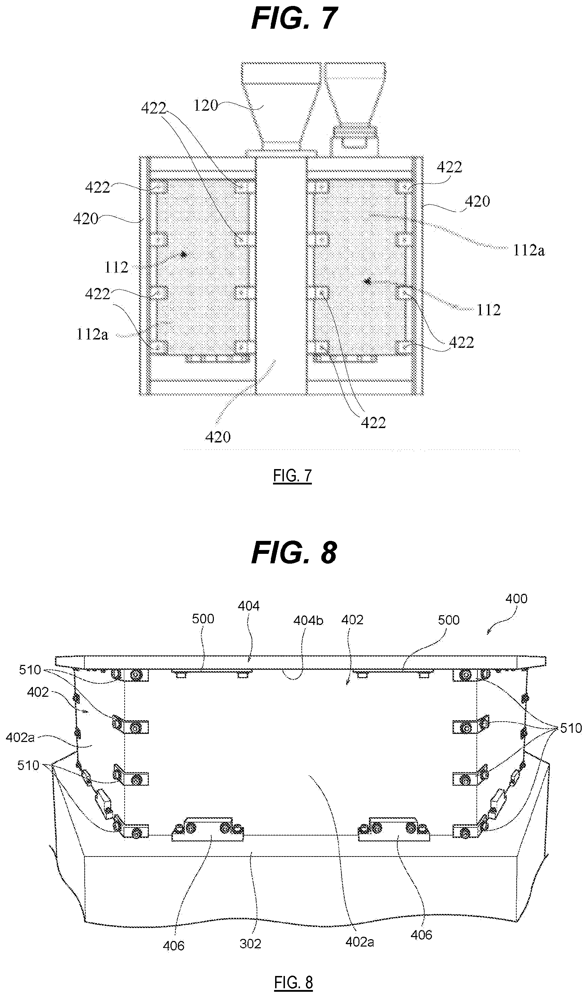

The heat radiation unit 400 can further optionally include a support frame supporting each amplifier 112. The support frame will be further described with reference to Fig. 7.

Fig. 7 is a side view schematically illustrating an example of a configuration of the support frame that can be included in the heat radiation unit 400 of the spacecraft 1 illustrated in Fig. 1. In Fig. 7, for convenience of description, each heat radiation plate 402 included in the heat radiation unit 400 is omitted.

At least one support frame 420 is attached to the upper surface 302 (see Fig. 4) of the body 300 according to the total number of amplifiers 112 used. Fig. 7 illustrates an example in which one support frame 420 is provided between two adjacent amplifiers 112. In a case where six (or four) amplifiers 112 are used, a total of six (or four) support frames that are spaced apart from one another and extend substantially parallel to one another can be attached to the upper surface 302 of the body 300.

Each support frame 420 can be formed of any material including, for example, aluminum, duralumin, iron, steel, and the like.

Each support frame 420 can include a plurality of fixing plates 422 extending in a lateral direction from an end surface of the support frame 420. Each support frame 420 can support the amplifier 112 by fixing a bolt, a screw, a rivet, or the like passing through a hole formed in the fixing plate 422 to the amplifier 112.

Although the heat radiation plate 402 is omitted in Fig. 7, the heat radiation plate 402 can be fixed (thermally connected) so as to cover an outer surface 112a of each amplifier 112 (the outer surfaces 112a of two amplifiers 112 are illustrated in Fig. 7 as an example).

Further, although not illustrated in Fig. 7, each support frame 420 can be fixed to the upper surface 302 while sandwiching at least one heat insulating member (for example, at least one heat insulating plate) with the upper surface 302 of the body 300 in order to suppress thermal connection between each support frame 420 and (the upper surface 302 of) the body 300. As a result, heat generated in one of the support frame 420 (the heat radiation unit 400) and the body 300 can be prevented from propagating to the other.

Such a heat insulating member can be formed of, for example, a material having a thermal conductivity of 0.2 W/m · K or less. Such a material can be formed of, for example, a resin and/or ceramic. Specifically, such a material may be a polyimide, a laminated heat insulating material, carbon fiber reinforced plastics (CFRP), a glass epoxy resin, and/or a multi layer insulation (MLI) and the like without being limited thereto.

The support frames 420 and the upper surface 302 of the body 300 can be fixed by any method. For example, although not illustrated in Fig. 7, the support frame 420 can be fixed to the upper surface 302 by fixing a fixing member that has a substantially L-shaped or substantially inverted L-shaped cross-sectional shape and is in contact with a side wall of the support frame 420 and the upper surface 302 to the support frame 420 and the upper surface 302 with a fastening member such as a screw, a bolt, or a rivet in a state where the heat insulating member is sandwiched between the support frame 420 and the upper surface 302 of the body 300.

### 4. Modification

### (1) Use of Thermally Conductive Member

As illustrated in Fig. 5, at a timing at which sunlight traveling in a lateral direction (for example, a direction perpendicular to the reference direction D illustrated in Fig. 4) S₂ is incident on the heat radiation unit 400, a temperature of a first amplifier 112 (for example, the amplifier 112 arranged on the right side in Fig. 5) fixed to the heat radiation plate 402 irradiated with the sunlight can be higher than a temperature of a second amplifier 112 (for example, the amplifier 112 arranged on the left side in Fig. 5) that is arranged on the opposite side to the amplifier 112 and is difficult to be irradiated with the sunlight.

In this case, power of a signal amplified and output by the first amplifier 112 having a higher temperature can be lower than power of a signal amplified and output by the second amplifier 112. As a result, power of a signal combined and output by the combiner 113 (see Fig. 3) can also be lower than the originally intended power.

Furthermore, the power of the signal amplified and output by the first amplifier 112 can more easily vary with the lapse of time as compared with the power of the signal amplified and output by the second amplifier 112. As a result, the power of the signal combined and output by the combiner 113 can also vary with the lapse of time.

In order to suppress the occurrence of such a situation, it is preferable to equalize the temperatures of all the amplifiers 112 included in the heat radiation unit 400. In order to implement such equalization, a configuration described below can be adopted.

Fig. 8 is a perspective view schematically illustrating a part of another configuration example of the spacecraft 1 illustrated in Fig. 1. Although only the heat radiation unit 400, the upper surface 30 of the body 300, and the like are illustrated in Fig. 8, other configurations are similar to those illustrated in Fig. 1.

As illustrated in Fig. 8, the heat radiation unit 400 can further include at least one (two in Fig. 8 as an example) first thermally conductive member 500 that is in contact with both a lower surface 404b of the top plate 404 and the side wall 402a of each heat radiation plate 402 to thermally connect the lower surface 404b and the side wall 402a to each other.

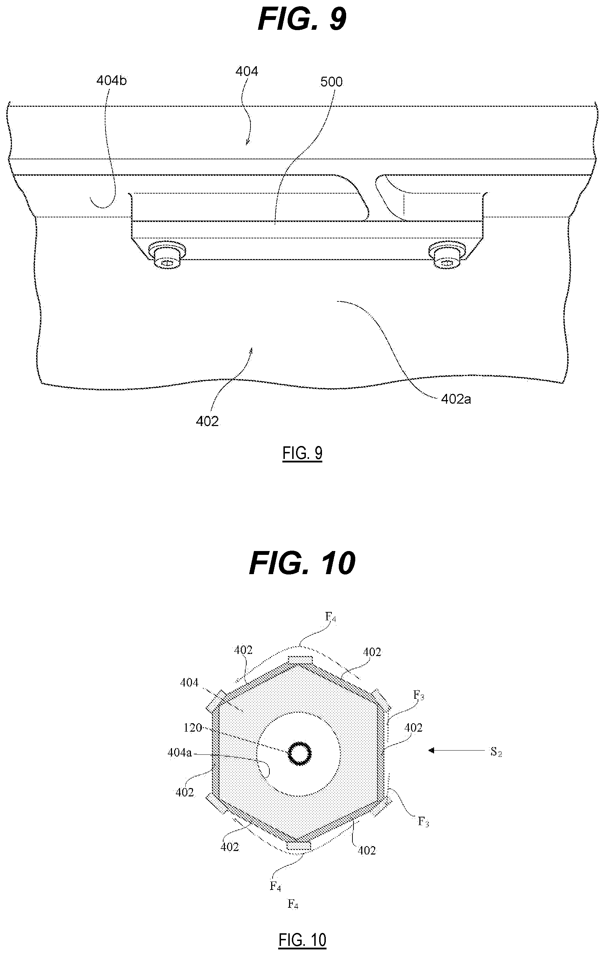

Fig. 9 is an enlarged perspective view illustrating only the first thermally conductive member 500 and a periphery thereof illustrated in Fig. 8. As illustrated in Fig. 9, the first thermally conductive member 500 can have a substantially rectangular parallelepiped shape as a whole. For example, the first thermally conductive member 500 can be fixed to the lower surface 404b by using a fastening member such as a bolt, a screw, or a rivet that is engaged with the first thermally conductive member 500 and the lower surface 404b in a state where one surface (for example, an upper surface) is in contact with the lower surface 404b of the top plate 404 and another surface (for example, a side surface) is in contact with the side wall 402a of the heat radiation plate 402. In another example, the first thermally conductive member 500 can be integrally molded with one of (the lower surface 404b of) the top plate 404 and (the side wall 402a of) the heat radiation plate 402, and fixed to the other by using the fastening member. In still another example, the first thermally conductive member 500 can be fixed to both of (the lower surface 404b of) the top plate 404 and (the side wall 402a of) the heat radiation plate 402 by using the fastening members.

Such a first thermally conductive member 500 can be formed of any material including aluminum, duralumin, copper, iron, and/or steel.

Fig. 8 illustrates an example in which two first thermally conductive members 500 are provided for one heat radiation plate 402. However, the number of first thermally conductive members 500 provided for one heat radiation plate 402 can be one or more.

As schematically illustrated in Fig. 5, a case where sunlight traveling in the direction S₂ is incident on the radiation plate 402 is considered. In this case, heat generated in the radiation plate 402 (and the amplifier 112 thermally connected thereto) is transferred to the top plate 404 via the first thermally conductive member 500 provided on the radiation plate 402 (arrow F₁), and can propagate through the entire top plate 404 (arrow F₂). As a result, the heat propagating through the entire top plate 404 can also be transferred to each amplifier 112 via another radiation plate 402 thermally connected to the top plate 404 via the first thermally conductive member 500. As a result, the temperatures of all the amplifiers 112 can be equalized.

The first thermally conductive member 500 may be a portion integrally molded with the top plate 404 (or the heat radiation plate 404) or may be a portion welded or deposited to the top plate 404 (or the heat radiation plate 404) .

Returning to Fig. 8, it is also possible to adopt a second thermally conductive member 510 in addition to or instead of the first thermally conductive member 500 described above. Specifically, the heat radiation unit 400 can further include, in addition to or instead of the first thermally conductive member 500, at least one second thermally conductive member 510 that thermally connects two adjacent heat radiation plates 402 among the plurality of heat radiation plates 402.

Such a second thermally conductive member 510 can have a shape extending in a substantially V shape as a whole. The second thermally conductive member 510 can be fixed to the side walls 402a by using fastening members such as bolts, screws, or rivets that are engaged with the side walls 402a in a state where one surface (inner surface) is in contact with the side walls 402a of the two adjacent radiation plates 402. As a result, the second thermally conductive member 510 can thermally connect the two adjacent heat radiation plates 402.

Such a second thermally conductive member 510 can be formed of any material including aluminum, duralumin, copper, iron, and/or steel.

Fig. 8 illustrates an example in which four second thermally conductive members 510 are provided for two adjacent heat radiation plates 402. However, the number of second thermally conductive members 510 provided for two adjacent heat radiation plates 402 can be one or more.

As schematically illustrated in Fig. 10, a case where sunlight traveling in the direction S₂ is incident on the radiation plate 402 is considered. In this case, heat generated in the radiation plate 402 (and the amplifier 112 thermally connected thereto) is transferred to another radiation plate 402 adjacent to the radiation plate 402 via the second thermally conductive member 510 provided on the radiation plate 402 (arrow F₃), and can further propagate to still another radiation plate 402 adjacent to the another radiation plate 402 via the second thermally conductive member 510 provided on the another radiation plate 402 (arrow F₄). As a result, the heat generated in the amplifier 112 thermally connected to the radiation plate 402 irradiated with sunlight can also be transferred to each of the other amplifiers 112. As a result, the temperatures of all the amplifiers 112 can be equalized.

### (2) Others

In various embodiments described above, an example in which both the antenna unit and the heat radiation unit 400 are provided in association with the same surface (here, the upper surface 302 as an example) of the body 300 has been described. However, in another embodiment, the antenna unit and the heat radiation unit 400 can be provided in association with different surfaces of the body 300. For example, the antenna unit can be provided in association with the upper surface 302 of the body 300 (above the upper surface 302), and the heat radiation unit 400 may be provided in association with a lower surface 304 of the body 300 (below the lower surface 304). Also in this case, the heat radiation plates 402 included in the heat radiation unit 400 can be provided so as to extend substantially parallel to the reference direction D, and the heat radiation plates 402 can be arranged in the same manner as described above so as not to be thermally connected to the lower surface 304 of the body 300.

In addition, it is assumed that the amplifier 112 can be subjected to thermal destruction by any chance, and in this case, it is also possible to provide a protection mechanism that interrupts observation before the amplifier 112 is subjected to such thermal destruction. For example, it is preferable to install a temperature sensor (not illustrated) in a region (for example, any portion of the heat radiation unit 400) in which an element (for example, the amplifier 112) in which an element that generates heat is housed. In a case where a temperature measured by the temperature sensor exceeds a threshold value, the processor 320 connected to the temperature sensor can safely interrupt observation by executing a predetermined command program.

Furthermore, in various embodiments described above, it has been assumed that each heat radiation plate 402 is provided so as to extend substantially parallel to the reference direction D, but such a configuration is not an essential configuration and can be used as an option. That is, it is also possible to effectively radiate heat in the spacecraft 1 by using at least one of the configurations exemplified below without using the configuration.
- A configuration in which at least one heat insulating member 406 is provided between each heat radiation plate 402 and the body 300 (see Fig. 4 and the like)
- A configuration in which at least one first thermally conductive member 500 is provided between the top plate 404 and each heat radiation plate 402 (see Figs. 8 and 9 and the like)
- A configuration in which at least one second thermally conductive member 510 is provided between two adjacent heat radiation plates 402 (see Fig. 8 and the like)

In addition, for the configuration in which each heat radiation plate 402 is provided so as to extend substantially parallel to the reference direction D, an example in which all the heat radiation plates 402 are provided so as to extend substantially parallel to the reference direction D has been described as the most preferable example. However, it is also possible to effectively radiate heat in the spacecraft 1 by providing at least one of the heat radiation plates 402 to be used so as to extend substantially parallel to the reference direction D.

As will be readily understood by those skilled in the art having the benefit of the present disclosure, various examples described above can be used in appropriate combinations in various patterns as long as no contradiction arises.

In view of many possible embodiments to which the principles of the invention disclosed in the present specification can be applied, it is to be understood that various exemplified embodiments are only various preferred examples and should not be considered as limiting the scope of the claimed invention to these various preferred examples. Actually, the technical scope of the claimed invention is defined by the appended claims. Therefore, it is requested that everything that belongs to the technical scope of the invention described in the claims is to be patented as the invention of the present inventors.

### 5. Various Aspects

A spacecraft according to a first aspect can include: "a body in which a plurality of devices including an oscillator that outputs a signal having a frequency of at least one frequency band are mounted; a plurality of heat radiation plates arranged outside the body, extending substantially parallel to a reference direction, and provided to face each other; at least one amplifier arranged in a region surrounded by the plurality of heat radiation plates, connected to any one of the plurality of heat radiation plates, and configured to amplify the signal output by the oscillator; and an antenna unit arranged outside the body and configured to radiate radio waves traveling in the reference direction by using the signal amplified by the at least one amplifier".

According to a second aspect, in the spacecraft according to the first aspect, a configuration in which "the at least one amplifier is fixed to any one of the plurality of heat radiation plates at a position that is not in contact with the body" can be adopted.

According to a third aspect, in the spacecraft according to the first aspect, a configuration in which "each of the plurality of heat radiation plates is provided at a distance from the body by being fixed to the body via at least one heat insulating member having a substantially L-shaped or substantially inverted L-shaped cross-sectional shape and attached to both a side wall of the heat radiation plate and an outer surface of the body" can be adopted.

According to a fourth aspect, in the spacecraft according to the first aspect, a configuration in which "a side wall of each of the plurality of heat radiation plates is positioned at a distance from an outer edge of an outer surface of the body in a direction toward a center of the outer surface" can be adopted.

According to a fifth aspect, in the spacecraft according to the first aspect, a configuration "further including a top plate formed of a thermally conductive member that is arranged on the plurality of heat radiation plates, is thermally connected to each of the plurality of heat radiation plates, and surrounds the at least one amplifier in cooperation with the plurality of heat radiation plates" can be adopted.

According to a sixth aspect, in the spacecraft according to the fifth aspect, a configuration "further including at least one first thermally conductive member that is in contact with a lower surface of the top plate and a side wall of each of the plurality of heat radiation plates to thermally connect the lower surface and the side wall" can be adopted.

According to a seventh aspect, in the spacecraft according to the first aspect, a configuration "further including at least one second thermally conductive member that thermally connects two adjacent heat radiation plates among the plurality of heat radiation plates" can be adopted.

According to an eighth aspect, in the spacecraft according to the first aspect, a configuration "further including at least one support frame that is provided so as to be fixed to an outer surface of the body with at least one heat insulating member interposed therebetween, extend in a direction intersecting the outer surface, and support the at least one amplifier" can be adopted.

According to a ninth aspect, in the spacecraft according to the third or eighth aspect, a configuration in which "the at least one heat insulating member has a thermal conductivity of 0.2 W/m · K or less" can be adopted.

As described above, according to the technology disclosed in the present application, it is possible to provide a spacecraft with an improved heat dissipation capability. Furthermore, according to the technology disclosed in the present application, it is possible to provide a spacecraft that can efficiently dissipate heat of a mounted high-output device. Furthermore, according to the technology disclosed in the present application, it is possible to provide a spacecraft that can improve performance (output performance or the like) and/or efficiency of a high-output device including a semiconductor device and mounted as described above by efficiently dissipating heat of the high-output device and lowering a temperature of the high-output device. Such a spacecraft can improve the efficiency of the high-output device including the semiconductor device, for example, by lowering an initial temperature at the start of operation of the high-output device. Furthermore, according to the technology disclosed in the present application, it is possible to provide a spacecraft that can secure a continuous operation time of a mounted high-output device by shortening a time required to dissipate heat of the high-output device while the spacecraft is orbiting the earth.

### Reference Signs List

- 1: Spacecraft
- D: Reference direction
- 100: Communication unit
- 112: Amplifier
- 300: Body
- 302: Upper surface
- 304: Lower surface
- 400: Heat radiation unit
- 402: Heat radiation plate
- 402a: Outer Surface
- 402b: Inner Surface
- 404: Top plate
- 404a: Opening
- 406: Heat insulating member
- 500: First thermally conductive member
- 510: Second thermally conductive member

## Claims

1. A spacecraft comprising:
a body in which a plurality of devices including an oscillator that outputs a signal having a frequency of at least one frequency band are mounted;
a plurality of heat radiation plates arranged outside the body, extending substantially parallel to a reference direction, and provided to face each other;
at least one amplifier arranged in a region surrounded by the plurality of heat radiation plates, connected to any one of the plurality of heat radiation plates, and configured to amplify the signal output by the oscillator; and
an antenna unit arranged outside the body and configured to radiate radio waves traveling in the reference direction by using the signal amplified by the at least one amplifier.

2. The spacecraft according to claim 1, wherein the at least one amplifier is fixed to any one of the plurality of heat radiation plates at a position that is not in contact with the body.

3. The spacecraft according to claim 1, wherein each of the plurality of heat radiation plates is provided at a distance from the body by being fixed to the body via at least one heat insulating member having a substantially L-shaped or substantially inverted L-shaped cross-sectional shape and attached to both a side wall of the heat radiation plate and an outer surface of the body.

4. The spacecraft according to claim 1, wherein a side wall of each of the plurality of heat radiation plates is positioned at a distance from an outer edge of an outer surface of the body in a direction toward a center of the outer surface.

5. The spacecraft according to claim 1, further comprising a top plate formed of a thermally conductive member that is arranged on the plurality of heat radiation plates, is thermally connected to each of the plurality of heat radiation plates, and surrounds the at least one amplifier in cooperation with the plurality of heat radiation plates.

6. The spacecraft according to claim 5, further comprising at least one first thermally conductive member that is in contact with a lower surface of the top plate and a side wall of each of the plurality of heat radiation plates to thermally connect the lower surface and the side wall.

7. The spacecraft according to claim 1, further comprising at least one second thermally conductive member that thermally connects two adjacent heat radiation plates among the plurality of heat radiation plates.

8. The spacecraft according to claim 1, further comprising at least one support frame that is provided so as to be fixed to an outer surface of the body with at least one heat insulating member interposed therebetween, extend in a direction intersecting the outer surface, and support the at least one amplifier.

9. The spacecraft according to claim 3 or 8, wherein the at least one heat insulating member has a thermal conductivity of 0.2 W/m · K or less.
